(19) Europäisches Patentamt
European Patent Office
Office européen des brevets

(11) **EP 1 656 433 B1**

(12) **EUROPEAN PATENT SPECIFICATION**

(45) Date of publication and mention
of the grant of the patent:
**27.02.2008 Bulletin 2008/09**

(51) Int Cl.:
*C09J 175/02* (2006.01)    *C09J 175/08* (2006.01)
*C09J 175/14* (2006.01)    *C09J 175/16* (2006.01)
*C09J 7/02* (2006.01)    *C08K 5/00* (2006.01)
*C08K 5/12* (2006.01)

(21) Application number: **04780061.0**

(22) Date of filing: **04.08.2004**

(86) International application number:
**PCT/US2004/025160**

(87) International publication number:
**WO 2005/019369 (03.03.2005 Gazette 2005/09)**

(54) **PRESSURE-SENSITIVE ADHESIVE TAPE AND PRESSURE-SENSITIVE ADHESIVE COMPOSITION FOR MEDICAL ADHESIVE TAPE**

HAFTKLEBEBAND UND HAFTKLEBEMASSE FÜR MEDIZINISCHE KLEBEBÄNDER

BANDE ADHESIVE SENSIBLE A LA PRESSION ET COMPOSITION ADHESIVE SENSIBLE A LA PRESSION POUR BANDE ADHESIVE MEDICALE

(84) Designated Contracting States:
**AT BE BG CH CY CZ DE DK EE ES FI FR GB GR HU IE IT LI LU MC NL PL PT RO SE SI SK TR**

(30) Priority: **19.08.2003 JP 2003207916**

(43) Date of publication of application:
**17.05.2006 Bulletin 2006/20**

(73) Proprietor: **3M Innovative Properties Company St. Paul, MN 55133-3427 (US)**

(72) Inventor: **TAKAKI, Shunsuke Sagamihara City, Kanagawa 229-1185 (JP)**

(74) Representative: **Meyers, Hans-Wilhelm Patentanwälte von Kreisler Selting Werner Bahnhofsvorplatz 1 Deichmannhaus am Dom 50667 Köln (DE)**

(56) References cited:
**EP-A- 1 375 618**          **WO-A-01/30933**
**WO-A-20/04060946**          **DE-A- 19 853 813**
**JP-A- 2002 060 456**          **US-A- 5 475 038**
**US-A1- 2002 084 021**

## Description

FIELD OF THE INVENTION

A pressure-sensitive adhesive composition for medical pressure-sensitive adhesive tapes, and pressure-sensitive adhesive tape using the same is provided.

BACKGROUND

The medical pressure-sensitive adhesive tape called a dressing material generally has a structure such that a pressure-sensitive adhesive is coated on a substrate. In such an adhesive tape, a liner is present or not present on the adhesive coated surface. In the case of not having a liner, a release agent called a low adhesive backsize (LAB) is applied to the adhesive non-coated surface of the substrate and the tape is formed into a roll. The pressure-sensitive adhesive tape also includes a transfer tape where a substrate is not used and only the adhesive layer is sandwiched by liners. Among these, some tapes or dressing materials have water resistance but no air permeability, some tapes have air permeability but no water resistance, and in recent years, some tapes or dressing materials have both water resistance and air permeability.

As the air-impermeable water-resistant tape, those obtained by coating a hydrophobic adhesive on a plastic substrate having no air permeability are being used. In the adhesive widely used as the hydrophobic adhesive, a tackifier represented by rosins for imparting tackiness to a resin such as acrylic resin represented by an acrylic acid-isooctyl acrylate copolymer, synthetic rubber-base resin represented by a styreneisoprene-styrene block copolymer, or natural rubber-base resin, and a plasticizer of various types for imparting flexibility are added. The tapes produced by coating such an adhesive on a substrate having no air permeability exhibit firm adhesion to skin but these tapes have a problem in that the skin becomes stuffy or sodden due to no air permeability. Furthermore, in some acrylic adhesives, a slight amount of monomer remains and this remaining monomer causes problems such as skin irritation or eruption. Also, acrylic adhesives mostly have a peculiar odor and disadvantageously discomfort some persons. Many synthetic rubber-base adhesives readily deteriorate due to heat or light and when exposed to light for a long period, deterioration such as discoloration or softening may take place. Natural rubber-base adhesives contain an allergenic latex and have a problem of causing skin eruption. A large number of conventional techniques are known thereon and non-limiting main examples of the prior technique include Japanese Unexamined Patent Literature (Kokai) No. 2000-116695.

In order to prevent the skin from becoming stuffy or sodden due to no air permeability, a method of coating a hydrophilic adhesive on a substrate such as non-woven fabric physically having air-permeable spaces, plastic film having punched therein air holes, or urethane film having high moisture permeability has been proposed. Examples of the hydrophilic adhesive include a hydrous gel-type adhesive represented by the hydrogel as a substrate for poultices, and a hydrous adhesive represented by an electrically conducting adhesive used for an electrode of electrocardiogram. The hydrophilic adhesive is originally hydrous and therefore, its use as a fixing tape has a problem in view of storage. Furthermore, the adhesive strength to skin is generally weak from the beginning and this is a problem as a fixing tape. Therefore, the hydrophilic adhesive is not being used except for special uses. A large number of conventional techniques are known thereon and non-limiting main examples of the prior technique include Kokai No. 9-188618; Kokai No. 9-71541; Kokai No. 6-254150; Kokai No. 11-192297; Kokai No. 6-336581; Kokai No. 2001-104468; Kokai No. 2001-151973; Kokai No. 2001-152031; Kokai No. 60-99180; U.S. Patent No. 5,536,768.

JP 2002/060456 discloses a urethane oligomer which is used as a curative component for pressure-sensitive adhesive which does not contain an organic solvent, is hardly skin-irritative, and is excellent in moisture permeability.

For preventing the skin from becoming stuffy or sodden due to no air permeability, in many cases, the above-described hydrophobic adhesive is coated on a plastic film substrate and thereafter, physical through-holes are formed in the plastic film substrate and the hydrophobic adhesive layer by a heated needle or an emboss roll to enhance the air permeability. Non-limiting examples of the prior technique include Kokai No. 56-112255. The skin in the periphery of hole formed becomes less stuffy or sodden but this is not sufficient for preventing the entire portion attached with the adhesive tape from becoming stuffy or sodden and the hole rather raises a problem that when water is attached thereto, the water intrudes therethrough. Furthermore, in this method, the problems attributable to the adhesive itself, such as skin irritation, eruption, allergy and deterioration, are not solved at all and fully satisfied tapes have not yet been obtained.

In order to prevent the skin from becoming stuffy or sodden, a large number of methods have been proposed, where a non-woven fabric physically having air-permeable spaces, a plastic film having punched therein air holes, or a urethane film having high moisture permeability is used as the substrate and a hydrophilic group is introduced into a part of the hydrophobic adhesive by chemical means to enhance the moisture vapor permeability or a hydrophilic or water-absorptive material is mixed by physical means to allow the sweat from skin to escape through these portions. For introducing the hydrophilic group by chemical means, a method of chemically bonding an ethylene oxide group, a propylene oxide group, a hydroxyl group or a carboxyl group to a hydrophobic acrylic resin to intensify the hydrophilicity and thereby increase the moisture vapor permeability is employed. For mixing a hydrophilic or water-absorptive material by physical means, a method of kneading, for example, hydrophilic and hydrous sodium polyacrylate or carboxymethyl cellulose into the above-described hydrophobic adhesive is employed. However, the method of introducing a hydrophilic group by chemical means is limited in the air-permeability due to the degree of introduction of the hydrophilic group and the method of mixing a hydrophilic or water-absorptive material by physical means has a problem in that when water comes into direct contact with the adhesive, the water resistance is lost. Therefore, not only a urethane film having high moisture-permeability need be used as the substrate but also problems attributable to the adhesive itself, such as skin irritation, eruption, allergy and deterioration, are present and fully satisfied tapes have not yet been obtained. A large number of conventional techniques are known thereon and non-limiting main examples of the prior technique include Kokai No. 2001-161741; Kokai No. 2001-253819; Kokai No. 3-193057; Kokai No. 9-309824; Kokai No. 6-16542; Kokai No. 10-258119; Kokai No. 2000-189453.

A large number of urethane-base adhesives have been studied as the base of adhesives. Non-limiting main examples of the prior technique thereon include National Publication (Kohyo) No. 2000-503048; Kohyo No. 2001-508814; Kohyo No. 2002-501954 disclosing a medical urethane adhesive, which are, however, silent on the air-permeability, hydrophilicity, hydrophobicity and the like and also silent on the repeated adhesion property. Kokai No. 11-29044 discloses an air-permeable and water-absorptive urethane adhesive but this is used by dissolving it in an organic solvent and coating the solution and cannot be UV-cured after the coating. Kokai No. 9-188618 discloses a segment polyurethane adhesive but this is also restricted by the coating step.

Heretofore, the adhesive is generally coated on a substrate by a method of applying a coating solution comprising an organic solvent having dissolved therein an adhesive component on a substrate and drying it. However, this method has a problem in that skin troubles may occur due to remaining of the organic solvent in the adhesive or environmental pollution may be caused on drying of the organic solvent. To solve this problem, a method of coating an emulsion comprising water having dispersed therein an adhesive and drying it has been proposed but this method has a problem in that the production process is restricted to give narrow latitude to the employable formulation and when dried, the coated film is liable to change in the properties. In recent years, a hot-melt coating method of coating an adhesive in the heated and melted state on a substrate has been proposed but this method has a problem in that melting, mixing and coating at a high temperature are necessary and the handling is restricted.

SUMMARY OF THE INVENTION

In one embodiment, the medical pressure-sensitive adhesive tape of the present invention is an adhesive tape having high moisture permeability of enabling less generation of skin troubles such as stuffiness, soddenness and eruption, and at the same time, having excellent water resistance such that even when contacted with water, the tape is not easily separated from skin. Furthermore, the adhesive tape of the present invention can be peeled off at the peeling with reduced skin irritation, can be used for repeated adhesion of several times while reducing the decrease in the adhesive strength and is almost odorless. In another embodiment, the medical adhesive tape of the present invention is an almost odorless adhesive tape having high moisture permeability, high moisture absorptivity and high moisture retentivity all at the same time.

According to one embodiment, the present invention is a pressure-sensitive adhesive composition for medical pressure-sensitive adhesive tapes, comprising a base polymer containing a pressure-sensitive adhesive polymer obtained by crosslinking or curing a precursor containing a urethane acrylate oligomer and an ultraviolet (UV) initiator, the base polymer having a glass transition temperature (Tg) of 0°C or less.

According to another embodiment, the present invention is a medical pressure-sensitive adhesive tape comprising a layer of the above-described pressure-sensitive adhesive composition.

According to still another embodiment, the present invention is a method for producing a pressure-sensitive adhesive composition for medical pressure-sensitive adhesive tapes, comprising:

mixing a pressure-sensitive adhesive composition precursor containing a urethane acrylate oligomer and an ultraviolet (UV) initiator,

heating the adhesive composition precursor at a temperature of 50°C to less than 100°C to form a coating solution having a viscosity of 2,000 to 100,000 mPa·s, and

applying the coating solution to a substrate and thereafter, crosslinking or curing the urethane acrylate oligomer to form a base polymer having a glass transition temperature (Tg) of 0°C or less.

In the present invention, the "glass transition temperature (Tg)" is measured by a viscoelasticity measuring apparatus generally available on the market, etc.

The "viscosity" is measured by put the precursor containing an oligomer into a measuring cell of a molten viscometer (VISCOMETER) (DV-E), heating it at 100°C and rotating an exclusive spindle No. 27 at 0.5 RPM. The rang of "viscosity" is measured by continuously recording a viscosity on a recorder, while heating is stopped after the viscosity at 100°C is stabilized to allow the mixture to cool to 50°C.

In the present invention, the term "medical pressure-sensitive adhesive tape" includes both a medical adhesive tape or film having a pressure-sensitive adhesive composition layer on a substrate and a medical adhesive tape or film comprising only a pressure-sensitive adhesive composition layer.

The term "dressing material" means a medical adhesive tape or film having a pressure-sensitive adhesive composition layer on a substrate.

The term "transfer tape" means a medical adhesive tape comprising only a pressure-sensitive adhesive composition layer.

The terms "(meth)acryloyl", "(meth)acryl" and "(meth)acrylate" mean acryloyl or methacryloyl, acryl or methacryl, and acrylate or methacrylate, respectively.

DETAILED DESCRIPTION

The pressure-sensitive adhesive composition for use in the present invention comprises a base polymer and if desired, a plasticizer. The base polymer imparts tackiness to the composition and the plasticizer can soften the adhesive composition and relieve the skin irritation at the peeling. The adhesive composition for medical adhesive tapes of the present invention is described in detail below.

Base Polymer:

The base polymer in the adhesive composition contains a pressure-sensitive adhesive polymer obtained by crosslinking or curing a precursor containing a urethane acrylate oligomer and an ultraviolet (UV) initiator and at the same time, the glass transition temperature (Tg) of the base polymer is 0°C or less. A urethane oligomer is used as a raw material of the base polymer, so that a monomer such as acrylate monomer can be prevented from remaining in the base polymer to cause skin irritation. Furthermore, the glass transition temperature (Tg) of the base polymer is 0°C or less and this is lower than the use temperature such as room temperature (e.g., 25°C), so that the tape can have tackiness on fixing it to skin and can pliably deform to follow the skin shape.

Urethane Acrylate Oligomer:

The urethane acrylate oligomer as a raw material of the base polymer has a (meth)acryloyl group within the molecule. The (meth)acryloyl group reacts in the presence of an ultraviolet (UV) initiator and thereby the oligomer is crosslinked or cured to form a base polymer. The urethane acrylate oligomer desirably has a polyalkylene oxide structure such as polyethylene oxide, polypropylene oxide or polyethylene-propylene oxide, in the molecular structure. By having this polyalkylene oxide structure, high moisture permeability (moisture vapor transition ratio) can be ensured and skin troubles such as stuffiness, soddenness and eruption can be prevented. The amount of the polyalkylene oxide structure in the oligomer is appropriately selected but is usually from 80 to 90 wt%. Furthermore, depending on the ratio between polyethylene oxide and propylene oxide, the water resistance and moisture absorptivity vary. When propylene oxide is 100%, complete water resistance is exhibited and as the ratio of polyethylene oxide increases, the tape starts exhibiting hydrophilicity. When 80% or more, sufficiently high moisture absorptivity and moisture retentivity can be ensured.

The "high moisture permeability" means, in terms of a moisture vapor transition ratio (MVTR) under conditions of 37°C and 40% RH, a level of 100 $g/m^2$*24 hr or more. The "water resistance" means that water does not drop into the adhesive layer and the adhesive layer does not swell due to moisture absorption (excluding attached water) to increase in the volume.

The "moisture vapor transition ratio" is a value obtained by pouring water in an aluminum cup, fixing a measuring film to the top end of the cup using a rubber packing, a fixing ring and screws to provide a state of not allowing moisture vapor to escape from gaps and after keeping the cup at 37°C and 40% RH for a predetermined time, calculating the weight of moisture vapor passed through the film based on the entire critical difference.

The urethane acrylate oligomer optionally has a carboxyl group. When the oligomer has a carboxyl group, this imparts excellent water solubility or moisture absorptivity to the oligomer and the obtained base polymer is imparted with moisture absorptivity and moisture retentivity. When the base polymer has moisture absorptivity, the adhesive composition can exert sufficiently high moisture absorptivity or moisture retentivity even on use at the position where a large amount of moisture such as body fluid is generated. The amount of the carboxyl group introduced into the oligomer is appropriately selected by taking account of the properties such as moisture absorptivity required of the adhesive composition but the carboxyl group is generally contained in an amount of 0.1 to 1 wt%.

The urethane acrylate oligomer is more specifically an oligomer obtained, for example, by reacting a mixture containing a polyalkylene glycol, an organic isocyanate having two or more isocyanate groups, and a compound having both a functional group reactive with the isocyanate group and a (meth)acryloyl group. When the oligomer has a carboxyl group within the molecule, this can be obtained by adding a compound having both a functional group reactive with the isocyanate group and a carboxyl group, for example, a carboxyl group-containing polyol, to the above-described mixture.

As described above, the (meth)acryloyl group in the oligomer reacts in the presence of an ultraviolet (UV) initiator, thereby causing crosslinking or curing. Accordingly, the compound having both a functional group reactive with the isocyanate group and a (meth)acryloyl group provides a site for the crosslinking or curing in the oligomer and affects the properties of the obtained adhesive composition. When the amount of this compound is from 0.35 to 0.6 mol%, preferably from 0.4 to 0.45 mol% the obtained adhesive composition can ensure no skin irritation on peeling and no glue remaining while having a satisfactory adhesive strength to skin.

Examples of the urethane acrylate oligomer capable of providing an industrially usable water-resistant adhesive include a PSA-901 series UV-curable polyether-base urethane acrylate oligomer (Tg: -34°C) produced by Kyoeisha Kagaku. Such an oligomer has a basic structure represented by the following formula:

$$A\text{-}I\text{-}[(P\text{-}I)_r\text{-}(B\text{-}I)_s]_t\text{-}M$$

wherein

A is a dehydrogenation residue of a hydroxyalkyl (meth)acrylate,

I is a dicarbamoyl group derived from an organic diisocyanate,

P is a dehydrogenation residue of a random copolymer comprising a propylene oxide and content ratio of 0 to 20 mol% of an ethylene oxide and having a number average molecular weight of 500 to 5,000,

B is a dehydrogenation residue of a carboxyl group-containing polyol compound,

M is a dehydrogenation residue of a monool,

t is a number of 1 to 15,

when t is 1, r is a number of 1 to 20 and s is a number of 0 to 20, and

when t is a number of 2 to 15, r and s each is a number of 0 to 1 at both ends of the repeating unit $(P\text{-}I)_r\text{-}(B\text{-}I)_s$ and a number of 0 to 15 at the site other than the both ends.

On the other hand, examples of the oligomer capable of providing an industrially usable and preferred moisture-absorptive adhesive include a PSA-903 series UV-curable polyether-base urethane acrylate oligomer (Tg: -34°C) produced by Kyoeisha Kagaku. Such an oligomer has a basic structure such that in $A\text{-}I\text{-}[(P\text{-}I)_r\text{-}(BI)_s]_t\text{-}M$ above, P is a dehydrogenation residue of a random copolymer comprising a propylene oxide and a content ratio of 50 to 95 mol% of an ethylene oxide and having a number average molecular weight of 500 to 5,000, and when t is 1, r is a number of 1 to 20 and s is a number of 0 to 20, and when t is 2 to 15, r and s each is a number of 0 to 1 at both ends of the repeating unit $(P\text{-}I)_r(B\text{-}I)_s$ and a number of 0 to 15 at the site other than the both ends. The urethane acrylate oligomer as described above is disclosed in Japanese Unexamined Patent Publication (kokai) No. 2002-60456.

By containing a unit derived from the polyether polyol of the random copolymer P of propylene oxide and ethylene oxide, moisture vapor permeability is imparted and by controlling the ratio between propylene oxide and ethylene oxide, the water resistance and moisture absorptivity can be controlled. That is, the moisture absorptivity can be enhanced by increasing the content ratio of ethylene oxide and the water resistance can be enhanced by decreasing it. Furthermore, by having the dehydrogenation residue A of hydroxyalkyl (meth)acrylate, post-crosslinking by ultraviolet ray (UV) can be achieved.

I may be a dicarbamoyl group derived from at least one organic diisocyanate compound selected from hexamethylene diisocyanate, trimethylhexamethylene diisocyanate, isophorone diisocyanate, norbornane diisocyanate, hydrogenated xylylene diisocyanate, hydrogenated diphenylmethane diisocyanate, tolylene diisocyanate, xylylene diisocyanate and diphenylmethane diisocyanate, for example.

B may be a dehydrogenation residue of a carboxyl group-containing polyol selected from 2,2-dimethylolpropionic acid, 2,2-dimethylolbutanoic acid, 2,2-dimethylolvaleric acid, dioxyadipic acid, dioxymaleic acid, tartaric acid, 2,6-dioxybenzoic acid and 1,2-dioxyglyceric acid, for example.

M may be a dehydrogenation residue of a monool compound selected from alkoxy polyethylene glycol, alkoxy polypropylene glycol, aliphatic alcohol, hydroxyl group-containing (meth)acrylate and carboxyl group-containing monoalcohol, for example.

The PSA-901 series UV-curable urethane acrylate adhesive produced by Kyoeisha Kagaku capable of providing a water-resistant adhesive includes several types different in the content of reactive acrylate group, such as PSA-901, PSA-901-1 and PSA-901-2. In the present invention, the adhesive composition is demanded to enable peeling with reduced skin irritation at the peeling and enable repeated adhesion of several times while preventing decrease in the adhesive strength. For realizing these, the adhesive composition must have sufficiently large cohesive force not to allow strong adhesion to the skin tissue despite its satisfactory adhesive strength to skin. It has been found that when in the PSA-901 series UV-curable water-insoluble urethane acrylate adhesive produced by Kyoeisha Kagaku, a urethane acrylate oligomer having a 2-hydroxyethyl acrylate content of 0.35 to 0.6 mol%, preferably from 0.4 to 0.45 mol%, based on the entire oligomer is used as the compound having both a functional group reactive with the isocyanate group and a (meth)acryloyl group in the urethane acrylate oligomer, the adhesive obtained has a tendency which does not strongly adhere to the skin tissue due to a sufficiently large cohesive force despite its satisfactory adhesive strength to skin.

On the other hand, the PSA-903 series UV-curable urethane acrylate adhesive produced by Kyoeisha Kagaku capable of providing a moisture-absorptive adhesive includes several types different in the content of reactive acrylate group, such as PSA-903, PSA-903-1 and PSA-903-2. It has been found that when a urethane acrylate oligomer having a 2-hydroxyethyl acrylate content of 0.35 to 0.1 mol%, preferably from 0.4 to 0.45 mol%, based on the entire oligomer is used, the obtained adhesive has a tendency which does not strongly adhere to the skin tissue despite its satisfactory adhesive strength to skin. Furthermore, when a 2,2-dimethylolbutanoic acid is reacted with a carboxyl group-containing polyol so as to cause hydrogen bonding with water and thereby obtain a sufficiently large moisture-holding capacity, the obtained oligomer is improved in the water solubility and moisture retentivity.

The "satisfactory adhesive strength to skin" means an adhesive strength to skin of approximately 10 to 200 g/inch, preferably on the order of 40 to 100 g/inch for lowering skin irritation upon peeling. Also, the sufficiently large cohesive force despite a satisfactory adhesive strength to skin means such a degree that the shear creep value of the adhesive after 3 minutes is from $0.5\times10^{-5}$ to $50\times10^{-5}$ cm$^2$/dyne, preferably from $1\times10^{-5}$ to $30\times10^{-5}$ cm$^2$/dyne for lowering skin irritation upon peeling.

The "shear creep value" is measured as follows. Two specimens each having a predetermined dimension and comprising an adhesive sheet are prepared and attached to both sides of a stainless steel-made movable plate. One surface of the movable plate having on both surfaces thereof an adhesive sheet is laminated with a stainless steel-made fixed plate and the opposite surface of the movable plate is laminated with a top plate. At a temperature of 25°C, a load is imposed on the thus-obtained top plate/adhesive sheet/movable plate/adhesive sheet/fixed plate laminate from the edge part in one side of the movable plate to the direction parallel to the laminate and the distortion is measured. Based on this measured value, the shear creep value is calculated according to the following formula:

$$J(t) = (D(t)/T)(F/S)$$

(wherein J(t) is a shear creep value after t minutes, D(t) is a measured value (cm) of distortion after t minutes, T is a thickness (cm) of specimen, F is a load (dyne) and S is an area (cm$^2$) of specimen).

Insofar as the effect of the present invention is not impaired, the base polymer may contain a polymer other than the polymer obtained by crosslinking or curing the urethane acrylate oligomer. Examples of the polymer which may be contained in the base polymer include polymers having good compatibility with oligomer and other water-soluble polymers, such as polyethylene glycol, polypropylene glycol, and polyol comprising a polyethylene oxide and polypropylene oxide random or block copolymer. The polymer other than the polymer derived from the urethane acrylate oligomer is contained in an amount of 20 wt% or less based on the weight of the base polymer.

Plasticizer:

The adhesive composition of the present invention may contain a plasticizer, if desired. The plasticizer facilitates the peeling with reduced skin irritation when the medical adhesive tape is peeled off from the skin. The plasticizer softens the adhesive, as a result, the adhesive composition is easily elongated at the peeling and transmission of the abrupt tensile force at the peeling to skin is delayed, whereby the skin irritation can be relieved. The plasticizer which can be used in the adhesive composition of the present invention includes hydrophobic oils and hydrophilic oils. Non-limiting examples of the hydrophobic oil include mineral oil and liquid paraffin. This oil enhances the adhesive strength and reduces the skin irritation at the peeling. On the other hand, when a hydrophilic oil is used as the plasticizer, the hydrophilic oil is dispersed in the adhesive layer and on the adhesive surface, the hydrophilic oil limits the adhesion area, as a result, the adhesive strength can be decreased and the skin irritation at the peeling is reduced. Non-limiting examples of the hydrophilic oil which can be used include, as an oily material having a hydroxyl group as the hydrophilic group, polyhydric alcohols such as glycerin, polyethylene glycol and propylene glycol, and derivatized products thereof such as methoxypolyethylene glycol. In particular, polyethylene glycol is preferred, because the water resistance is not impaired and the moisture vapor permeability is enhanced. The amount of the plasticizer should be appropriately selected but for imparting flexibility, the plasticizer is preferably added in an amount of approximately from 1 to 20 wt%, more desirably from 3 to 10 wt%.

Ultraviolet (UV) Initiator:

The adhesive composition of the present invention is produced by mixing and dissolving respective formulation components including urethane acrylate oligomer to prepare a coating stock solution, coating the stock solution on a substrate and post-crosslinking it by UV irradiation, whereby an adhesive composition capable of re-peeling from and re-adhesion to skin and reduced in the glue remaining and in the abrupt decrease of the adhesive strength due to sweating can be obtained. For the post-crosslinking by UV irradiation, addition of a UV initiation is necessary. The UV initiator varies depending on the energy band of the UV lamp used and is selected by taking account of the skin irritation, safety, solubility and odor after irradiation. Non-limiting examples of the initiator include those selected from the group consisting of a benzophenone substituted by either one or both of an ionic group and a hydrophilic group; a thioxanthone substituted by either one or both of an ionic group and a hydrophilic group; and a phenyl ketone such as 4-substituted-(2-hydroxy-2-propyl)phenyl ketone (wherein the 4-substituent is an ionic group or a hydrophilic group). Particularly preferred examples of the UV initiator include 1-(4-(2-hydroxy)-phenyl)-2-2-hydroxy-2-methyl-1-propan-1-one) available under the trade name of Irgacure-2959 from Ciba Specialty Chemicals. The amount added is appropriately selected by taking account of the relationship between the UV dosage and the adhesive property, however, in view of blending balance of the adhesive, the amount of the UV initiator blended is from 0.01 to 10 wt% based on the total amount of the adhesive composition including the oligomer and the plasticizer.

When a UV initiator such as Irgacure-2959 (trade name) is added in an amount of 1.5 wt% or more, it is observed that the UV initiator is resided in the adhesive composition and the base polymer undertakes photodecomposition under light such as fluorescent light and, for example, the adhesive composition is fluidized in a short period of time within one month. Such a phenomenon is particularly outstanding when the urethane acrylate oligomer has a carboxyl group. Accordingly, the amount of the UV initiator need be restricted to an appropriate amount so as to prevent the photodeterioration of the adhesive composition. The UV initiator is usually used in an amount of less than 1.5 wt%, preferably from 0.01 to 0.1 wt%, more preferably from 0.03 to 0.06 wt%, based on the total amount of the adhesive composition. By using such amount range, it is possible to prevent that the curing insufficiently proceed satisfactorily and stickiness results, and to prevent that photodeterioration occurs.

Other Additives:

The adhesive composition of the present invention may contain additives such as antioxidant, photostabilizer, ultraviolet absorbent, chain transfer agent and reaction inhibitor. In particular, when the oligomer contains a carboxyl group, the photodeterioration can be prevented by incorporating an antioxidant into the adhesive composition. For example, when an antioxidant, particularly, a hindered phenol-base antioxidant is added in an amount of 0.5 wt% or more based on the total amount of the adhesive composition, an adhesive composition free of deterioration even upon exposure to light of a fluorescent lamp for a long period can be obtained. Non-limiting examples of the hindered phenol-base antioxidant include Irganox brand antioxidants produced by Ciba Specialty Chemicals, which dissolve in the adhesive composition precursor before crosslinking, scarcely cause skin irritation and bring about neither coloration nor discoloration of the cured adhesive composition. Non-limiting preferred examples of the hindered phenol-base antioxidant include Irganox 245, Irganox 1035 and Irganox 1076. Among these, Irganox 245 (ethylene-bis(oxyethylene)-bis(3-(5-tert-butyl-4-hydroxy-m-tolyl)propionate)) is preferred. The hindered phenol-base antioxidant is added in an amount of 0.03 to wt% based on the total amount of the adhesive composition. If the amount of the antioxidant is too small, no effect is obtained, whereas if it is excessively large, the adhesion property of the adhesive composition may be changed. Particularly, the hindered phenol-base antioxidant is used in an amount of 0.1 to 0.6 wt%.

Methods of Manufacturing the Pressure-Sensitive Adhesive Composition and Pressure-Sensitive Adhesive Tape:

In one embodiment, the pressure-sensitive adhesive composition of the present invention is produced as follows. First, raw materials such as urethane acrylate oligomer and ultraviolet (UV) initiator are mixed to prepare a pressure-sensitive adhesive composition precursor. Then, the adhesive composition precursor is heated at a temperature of 50°C to less than 100°C to prepare a coating solution having a viscosity of 2,000 to 100,000 mPa·s. This coating solution is coated on a substrate and thereafter, the urethane acrylate oligomer is crosslinked or cured to form a base polymer having a glass transition point (Tg) of 0°C or less and thereby produce an adhesive composition on the substrate. The substrate may be a substrate having releasability for the adhesive composition, such as polyethylene terephthalate (PET) film. The substrate having releasability can be produced by any known method such as treatment with a silicone treating agent, a urethane treating agent or a fluorine compound-base treating agent. The adhesive composition formed on such a substrate having releasability or between two sheets of such substrates is thereafter peeled off from the substrate(s), whereby a medical adhesive tape (transfer tape) comprising only the adhesive composition layer is obtained. Alternatively, the adhesive composition layer is disposed on a substrate having high moisture-permeability and if desired, pressed, whereby a medical adhesive tape (dressing material) having an adhesive composition layer on a substrate can be obtained. Furthermore, a dressing material may also be directly formed by coating an adhesive composition precursor directly on a substrate having high moisture permeability and then crosslinking or curing the oligomer.

The adhesive composition precursor of the present invention can be continuously coated at a high speed at a temperature of 50 to 100°C mainly by using a hot-melt coater and after the coating, can be crosslinked or cured by the irradiation of a high-intensity UV lamp for a short time. Therefore, the production process is simplified and the productivity is increased. In the production of the adhesive composition of the present invention, respective formulation components are mixed and dissolved to form a coating stock solution (adhesive composition precursor). There is no problem as long as the mixing and dissolution for preparing the coating stock solution can be performed at room temperature, however, when the viscosity of the coating stock solution is excessively large, a uniform coating stock solution can be prepared by mixing and dissolving the components at a temperature of 100°C or less by using a high-viscosity mixer, kneader or extruder. The coating stock solution is preferably coated at a temperature where the coating stock solution can be coated with a viscosity of 2,000 mPa·s or more, so as not to cause dripping or reduction in the coating thickness. The adhesive composition precursor of the present invention can be controlled to a viscosity of 2,000 mPa·s or more by a so-called warm melt application at a temperature of 50 to 100°C and can be coated on a polyester liner or the like at a high speed. The raw materials of the adhesive composition for use in the present invention can be charged into a twin screw extruder of a hot-melt coater through a dedicated port, mixed and dissolved there and coated by an extruding die, whereby the mixing and dissolving process of raw materials and the coating process can be simultaneously performed by the same apparatus and therefore, a production method favored with very high productivity can be established. After the coating by an extruding die, the coating solution is rapidly cooled, therefore, dripping or reduction in the coating thickness does not occur.

The coating thickness of the adhesive composition of the present invention varies depending on the use form but this is from 0.01 to 4 mm. In the case of using the medical adhesive tape as a dressing material having an adhesive composition layer on a substrate, the suitable coating thickness is relatively small and from 0.02 to 0.04 mm. In the case of using the medical adhesive tape as a transfer tape having no substrate, not only a small coating thickness of 0.02 to 0.04 mm but also a relatively large coating thickness of 0.4 to 1 mm is sometimes preferred. After the coating, the coating solution is post-crosslinked by the UV irradiation to obtain an adhesive composition having adhesive strength and cohesive force suitable for a dressing material or the like. Examples of the UV irradiation method include use of a low-pressure or medium-pressure mercury lamp or a fluorescent lamp. In this case, a method of using lamps differing in the emission spectrum and having a highest emission intensity in the wavelength range from 280 to 400 nm is preferred. The total dosage at the UV irradiation is approximately from 10 to 1,000 mJ/cm$^2$. In the present invention, a reactive urethane acrylate oligomer system is used and therefore, problems attributable to the residual monomer need not be cared about, as a result, the post-crosslinking achieved with a low irradiation energy in a short period of time by a high-intensity UV lamp and an adhesive tape (sheet) having adhesive strength and cohesion force suitable for adhesion to skin can be obtained at a high speed. When the temperature of the coating solution is elevated due to UV irradiation, the molecular weight of the cured product may decrease or the cohesive force may lower. Therefore, particularly in the case of forming an adhesive composition having a thickness of 0.05 mm or less, a method for suppressing the elevation of temperature should be employed. To speak specifically, an action should be taken according to the equipment used, such as elevation of coating speed, installation of cooling device and mitigation of UV light convergence. At the UV irradiation, in order to prevent curing troubles due to oxygen, a method of irradiating UV light in a nitrogen atmosphere or a method of laminating a UV transmissive film such as polyester liner on the coating solution surface, irradiating UV light and after curing, recovering the UV transmissive film is used.

The urethane acrylate-base oligomer used for the adhesive of the present invention causes less irritation to skin than conventional acryl-base oligomers. Furthermore, the urethane acrylate-type base oligomer has almost no odor and also from this reason, use of a urethane acrylate-base oligomer is more preferred than acryl-base oligomers.

The adhesive composition prepared by such a method is usually laminated with a substrate having high moisture permeability and/or high air permeability to produce a medical tape. In the case of a medical tape of this type, a release agent called low adhesive backsize (LAB) is basically coated on one side of a high moisture-permeable and/or high air-permeable substrate (back surface treatment) and the tape is taken up into a roll form without a liner, cut into a use width and used as a roll material. Alternatively, the adhesive composition is laminated with a high moisture-permeable and/or high air-permeable substrate, cut together with a liner into a use shape and then used as a film material. Non-limiting examples of the high moisture-permeable and/or high air-permeable substrate used as the substrate of the medical adhesive tape of the present invention include a non-woven fabric sheet such as rayon and polyester, an air-impermeable plastic film having punched therein holes, and an air-permeable polyurethane film. In view of air permeability and water resistance of the adhesive composition, a non-woven fabric sheet having high air permeability and incapable of deteriorating due to water is desired. Non-limiting examples of the back surface treating agent for use in the back surface treatment include a silicone treating agent, a urethane treating agent and a fluorine compound-based treating agent.

The present invention is described below by referring to Examples, however, the present invention is not limited to these Examples.

EXAMPLES

(Example 1)

A medical pressure-sensitive adhesive tape comprising a pressure-sensitive adhesive composition having both high moisture permeability and excellent water resistance and capable of re-adhesion of several times is described. By virtue of the moisture permeability of the adhesive composition, skin troubles such as stuffiness, soddenness and eruption can be prevented. Furthermore, by virtue of the water resistance of the adhesive composition, even in the case of using a substrate with non-waterproofing back surface (namely, when the back surface (surface opposite the adhesive coated surface) of the substrate has no water resistance), the adhesive tape is scarcely separated from the skin on contacting of the medical adhesive tape with water.

As the reactive oligomer, LIGHT TACK PSA-901-1 (trade name) water-insoluble urethane acrylate oligomer produced by Kyoeisha Kagaku, Japan was used. As the ultraviolet (UV) initiator, Irgacure 2959 (trade name) produced by Ciba Specialty Chemical was used. As the plasticizer, a hydrophilic plasticizer Polyethylene Glycol PEG300 was added or not added. These raw materials were mixed to produce blended materials HNA-11 and HNA-20. The formulations are shown in Table 1.

Table 1

| Formulation | HNA-11 | HNA-20 |
|---|---|---|
| PSA-901-1 | 99.95 | 94.95 |
| PEG 300 | 0 | 5 |
| Irgacure 2959 | 0.05 | 0.05 |
| Total | 100 | 100 |

HNA-11 and HNA-20 each is a coating solution obtained by mixing it in a planetary mixer controlled to a temperature of 80°C. The coating solution was fed by a Mohno pump heated at 80°C and coated on a 38-micron heavy peeling PET liner (A-54, trade name, produced by Teijin DuPont) by passing a knife roll with a 0.05-mm gap. Thereafter, the coated surface was laminated with the peeling surface of a 50-micron light peeling PET liner (A-50, trade name, produced by Teijin DuPont) by passing a laminate roll with a 0.04-mm gap. In this way, a film sandwiched by two sheets of PET liner film was obtained. This film was continuously passed through an H-type UV lamp (120 W/cm) chamber manufactured by Fusion while setting the lamp height at 14 cm and thereby cured (crosslinked) with a total irradiation energy of 465 mJ/cm$^2$. The cured coating solution became an adhesive sheet favored with flexibility and tack, free of odor and having a thickness of about 35 microns. The shear creep value of the cured adhesive sheet after 3 minutes was measured.

The shear creep value of the adhesive sheet after 3 minutes was measured according to the measuring method of "shear creep value" described above. The dimension of the adhesive sheet was 2 cm (width) × 3.5 cm (length) × about 35 microns (thickness) and the load for the measurement weighed 200 g.

The results of the shear creep test are shown in Table 2. It is verified that the adhesive having added thereto a hydrophilic plasticizer is softened and readily creeps.

Table 2

| Formulation | Shear Creep (10$^{-5}$ cm$^2$/dyne) |
|---|---|
| HNA-11 | 15.8 |
| HNA-20 | 26.3 |

From the prepared adhesive sheet, the light peeling liner A-50 (trade name) was peeled off. Subsequently, the adhesive layer was laminated with the non-treated surface of a high air-permeable substrate subjected to a back surface treatment and pressed by nip rolls at 85°C to attain satisfactory adhesion between the adhesive and the substrate. The back surface-treated substrate used here was prepared by coating a silicone back surface-treating agent produced by Shin-Etsu Silicone as the back surface-treating agent on a rayon non-woven fabric (thickness: 50 microns, basis weight:

50 g/m$^2$) produced by 3M. The roll sheet obtained by laminating the adhesive sheet to the back surface substrate was slit into a width of 25 mm and after separating the heavy peeling liner A-54 (trade name), wound around a 3-inch core into a roll tape form. By virtue of the separation activity of the silicon back surface treating agent coated on the back surface substrate, the medical adhesive tape obtained could be peeled off without leaving the adhesive layer fixed to the back surface substrate.

The produced medical adhesive tape was fixed on an upper arm of a healthy person and after pressing it with a 1-kg roller, the adhesive tape was immediately peeled off at 180° and at a rate of 30 cm/min. The peel strength, the glue remaining on the skin and the peel feeling were evaluated. The results are shown in Table 3.

Table 3

| Formulation | Adhesive Strength to Skin | Glue Remaining | Peel Feeling |
|---|---|---|---|
| HNA-11 | 65 g/inch | none | no pain |
| HNA-20 | 45 g/inch | none | no pain |

When a hydrophilic oil Polyethylene Glycol PEG-300 is used as the plasticizer, the hydrophilic oil is dispersed in the adhesive layer and on the adhesive surface, the hydrophilic oil limits the adhesion area, so that the adhesive strength can be decreased and the skin irritation at the peeling can be reduced.

This adhesive can be peeled off with reduced skin irritation and therefore, can be used for repeated adhesion of several times. An operation of peeling off a once fixed tape and re-fixing it to a different site was repeated 5 times and the results are shown in Table 4.

Table 4

| Number of Repetitions | 1 | 2 | 3 | 4 | 5 |
|---|---|---|---|---|---|
| HNA-11 | 65 | 40 | 40 | 40 | 40 |
| HNA-20 | 50 | 50 | 50 | 50 | 50 |
| | | | | | g/inch |

HNA-11 was slightly decreased in the adhesive strength at the second time adhesion but thereafter, maintained a constant adhesive strength. HNA-20 was peeled off with ease due to the effect of hydrophilic oil and regardless of repeated adhesion, maintained a constant adhesive strength. The medical adhesive tape of the present invention is characterized by the capability of repeated adhesion of several times.

Furthermore, these medical adhesive tapes were measured on the moisture permeability in terms of a moisture vapor transition rate (MVTR, g/m$^2$*24 hr). The results are shown in Table 5.

Table 5

| Formulation | MVTR |
|---|---|
| HMA-11 | 1730 |
| HNA-20 | 1780 |
| g/m$^2$ *24 hours | |

Both medical adhesive tapes exhibit high moisture permeability and HNA-20 having added thereto a hydrophilic plasticizer exhibits slightly higher moisture permeability.

Thereafter, these medical adhesive tapes each was fixed on the inner surface of an aluminum cup containing water. After sealing the periphery of the aluminum cup, the cup was placed upside-down and left standing for 24 hours in the state that water and the adhesive layer were directly contacted. After 24 hours, the bleeding out of water through the non-woven fabric as the back surface substrate was evaluated but water did not drip and this reveals that the adhesive layer has excellent water resistance. After the test, the medical adhesive tape was peeled off from the aluminum cup and the presence or absence of swelling of the adhesive layer was observed, however, the adhesive layer was not swelled and maintained excellent water resistance.

The medical adhesive tape of the present invention was evaluated on the safety. The adhesive tape was placed in a storage bag prepared by combining aluminum foils and after heat-sealing the bag, the tape was subjected to accelerated deterioration at 49°C for 18 weeks. This condition is an accelerated deterioration condition corresponding to 2 years according to the Von't Hoff theory. The tape after the accelerated deterioration was free of discoloration, oozing, softening and deterioration of fluidization and found to be stable without causing glue remaining at the peeling after adhesion to skin. Also, the tape was deteriorated for 4 months under high-humidity conditions of 45°C-90% RH. The glue at the edge part of the tape was slightly softened but deterioration of fluidization was not observed and the tape was stable.

Furthermore, in order to examine the light stability, the adhesive surface of the tape sample was continuously exposed for 4 months in a place under light of Life Line II White Fluorescent Lamp FLR40SW/M 40W manufactured by NEC at a brightness of 800 lux and determined on the deterioration degree. The tape was free of discoloration, oozing, softening and deterioration of fluidization and found to be stable without causing glue remaining at the peeling after adhesion to skin.

As such, the present invention provides an adhesive tape comprising an adhesive having high moisture permeability of enabling less generation of skin troubles such as stuffiness, soddenness and eruption, and at the same time, having excellent water resistance such that even when a substrate with non-waterproofing back surface is used and contacted with water, the tape is not easily separated from skin. Furthermore, the adhesive tape of the present invention can be peeled off at the peeling with reduced skin irritation, can be used for repeated adhesion of several times while reducing the decrease in the adhesive strength, is almost odorless and can maintain its sufficiently stable properties.

(Comparative Example 1)

A conventional medical adhesive tape using a hydrophobic adhesive is described below as Comparative Example.

An acrylic adhesive was used as the hydrophobic adhesive, an air-permeable film was used as the back surface substrate and holes were formed in the adhesive layer to obtain high moisture permeability. As the commercially available medical adhesive tape of this type, medical adhesive tapes MICROPORE and TRANSPORE (trademarks) are sold from U.S. 3M.

These medical adhesive tapes were evaluated on the repeated adhesion of several times by repeating an operation of peeling off a once fixed tape and re-fixing it to a different site in the same manner as in Example 1. The results are shown in Table 6.

Table 6

| Number of Repetitions | 1 | 2 | 3 | 4 | 5 |
|---|---|---|---|---|---|
| MICROPORE | 95 | 45 | 25 | 25 | 20 |
| TRANSPORE | 85 | 45 | 35 | 35 | 30 |
| | | | | | g/inch |

These medical tapes could be firmly fixed at the first time.

Furthermore, these medical tapes were measured on the moisture permeability in terms of a moisture vapor transition rate (MVTR, g/m$^2$*24 hr). The results are shown in Table 7.

Table 7

| Formulation | MVTR |
|---|---|
| MICROPORE | 4200 |
| TRANSPORE | 6200 |
| g/m$^2$ *24 hours | |

(Example 2)

A blended material was prepared by adding a mineral oil as the hydrophobic plasticizer in place of the Polyethylene Glycol PEG-300 as the hydrophilic plasticizer in the formulation of HNA-20 in Example 1. The mineral oil used was Shellflex 371JY (trade name) produced by Shell Chemical. The formulations are shown in Table 8.

Table 8

| Formulation | HNA-220 |
|---|---|
| PSA-901-1 | 94.95 |
| Shellflex 371JY | 5 |
| Irgacure 2959 | 0.05 |
| Total | 100 |

The adhesive was coated in the same manner as in Example 1 except that the coating gap was 0.07 mm and the laminate gap was 0.07 mm. As a result, an adhesive sheet having a thickness of 0.07 mm after curing was obtained. Thereafter, a medical adhesive tape was produced in the same manner as in Example 1.

The produced medical adhesive tape was fixed on an upper arm of a normal person and after pressing it with a 1-kg roller, the adhesive tape was immediately peeled off at 180° and at a rate of 30 cm/min. The peel strength of adhesive tape, the glue remaining on the skin and the peel feeling were evaluated. The results are shown in Table 9.

Table 9

| Formulation | Adhesive Strength to Skin | Glue Remaining | Peel Feeling |
|---|---|---|---|
| HNA-220 | 80 g/inch | none | no pain |

When a mineral oil is added as the hydrophobic plasticizer, the adhesive is softened and at the peeling, the adhesive is flexible and easily elongated, whereby the adhesive strength is increased and the skin irritation at the peeling is decreased. As compared with HNA-10 where the plasticizer is not added, the fixing strength is increased but the skin irritation at the peeling is not changed. This adhesive can be peeled off with reduced sin irritation at the peeling and therefore, can be used for repeated adhesion of several times. An operation of peeling off a once fixed tape and re-fixing it to a different site was repeated 5 times and the results are shown in Table 10.

Table 10

| Number of Repetitions | 1 | 2 | 3 | 4 | 5 |
|---|---|---|---|---|---|
| HNA-20 | 80 | 75 | 70 | 65 | 65 |
| | | | | | g/inch |

Since the initial fixing strength is high, the adhesive strength is slightly decreased as the number of repetitions increases, however, unlike the tape of Comparative Example, abrupt decrease in the adhesive strength does not occur and the fixing can be satisfactorily repeated several times. Furthermore, this medical tape was measured on the moisture permeability in terms of a moisture vapor transition rate (MVTR, $g/m^2*24$ hr), as a result, a high moisture permeability of 2850 $g/m^2*24$ hr as MVTR was exhibited. Also, the adhesive layer was free of penetration and dripping of water and exhibited satisfactory water resistance.

(Example 3)

The present invention can be widely applied not only as a medical adhesive tape with a substrate (dressing material) but also as a transfer tape for the fixing to skin. Non-limiting examples of the application include fixing of a wig to scalp and fixing of a pouch for artificial anus. The present invention is characterized in that the tape has both high moisture permeability and high water resistance, can be peeled off with reduced skin irritation at the peeling, can be used for repeated adhesion and is almost odorless, therefore, the present invention is particularly effective for the wig fixing where the fixing position need be adjusted, or uses where the tape is continuously fixed or must be periodically exchanged. In uses as a transfer tape, a thick adhesive layer is superior in the flexibility, skin contact feeling and operability to a thin adhesive layer in many cases and therefore, a transfer tape having a coated thickness of 0.8 mm was produced from each ofHNA-10 and HNA-220. In the production, the pertinent blended material of Examples 1 and 2 was coated with a gap of 0.8 mm to have a coated thickness of 0.8 mm.

When the coating solution was cured, a soft and odorless adhesive sheet with tack having a thickness of about 0.8 mm was formed. The shear creep value of the cured adhesive sheet after 3 minutes was measured. The measured value is shown in Table 11. Even in the_thick coating, the coating solution was sufficiently cured and the shear creep value was low.

Table 11

| Formulation | Shear Creep ($10^{-5}$ cm$^2$/dyne) |
|---|---|
| HNA-11: 0.8 mm | 0.8 |
| HNA-220: 0.8 mm | 0.9 |

For the measurement of adhesive strength to skin, a 38-micron PET film as a back surface substrate was laminated to one surface of each transfer tape. Thereafter, the transfer tape was cut into a width of 1 inch, fixed to an upper arm of a normal person and after pressing with a 1-kg roller, immediately peeled off at 180° and at a rate of 30 cm/min. The peel strength, the glue remaining on the skin and the peel feeling were evaluated. The results are shown in Table 12.

Table 12

| Formulation | Adhesive Strength to | Glue Remaining | Peel Feeling |
|---|---|---|---|
| HNA-11: 0.8 mm | 115 g/inch | none | no pain |
| HNA-220: 0.8 mm | 80 g/inch | none | no pain |

These adhesives can be peeled off with reduced skin irritation at the peeling and therefore, can be used for repeated adhesion of several times. An operation of peeling off a once fixed tape and re-fixing it to a different site was repeated 5 times and the results are shown in Table 13.

Table 13

| Number of Repetitions | 1 | 2 | 3 | 4 | 5 |
|---|---|---|---|---|---|
| HNA-11: 08 mm | 115 | 85 | 125 | 95 | 85 |
| HNA-220: 0.8 mm | 85 | 80 | 95 | 90 | 85 |
| | | | | | g/inch |

The transfer tape of the present invention is characterized in that adhesion can be repeated several times.
Furthermore, these transfer tapes were measured on the moisture permeability in terms of a moisture vapor transition rate (MVTR, g/m$^2$*24 hr). The results are shown in Table 14.

Table 14

| Formulation | MVTR |
|---|---|
| HNA-11: 0.8 mm | 180 |
| HNA-220: 0.8 mm | 613 |
| g/m$^2$*24 hours | |

When the coated thickness was increased to 0.8 mm, the moisture vapor became difficult to pass through the adhesive layer and the MVTR was lowered to 1,000 g/m$^2$*24 hr or less. However, similarly to the medical adhesive tapes of Examples 1 and 2, these transfer tapes were free of penetration of water and exhibited satisfactory water resistance. When the adhesive thickness is increased to about 0.8 mm, the moisture vapor permeability is worsened, however, the transfer tape has water resistance, can be peeled off with reduced skin irritation at the peeling, can be used for repeated adhesion and is almost odorless. Therefore, the transfer tape is effective for wig fixing where the fixing position should be controlled or uses where the tape is continuously fixed or must be periodically exchanged.

(Example 4)

(Example Using Water-Soluble Oligomer)

A medical adhesive tape which has both high moisture permeability and high moisture absorptivity, exhibits satisfactory initial adhesive strength, can be peeled off with reduced skin irritation at the peeling and is almost odorless, is described below.

As the reactive oligomer, a water-soluble urethane acrylate oligomer LIGHT TACK PSA-903-1 (trade name) produced by Kyoeisha Kagaku, Japan was used. As the UV initiator, Irgacure 2959 (trade name) produced by Ciba Specialty Chemical was used. Furthermore, as the hindered phenol-base antioxidant, Irganox 245 (trade name) was used. As the hydrophilic plasticizer, Polyethylene Glycol PEG300 was added or not added. These raw materials were mixed to produce blended materials HGA-100 and HGA-110. The formulations are shown in Table 15.

Table 15

| Formulation | HGA-100 | HGA-110 |
|---|---|---|
| PSA-903-1 | 99.45 | 89.5 |
| PEG 300 | 0 | 10 |
| Irgacure 2959 | 0.05 | 0.05 |
| Irganox 245 | 0.5 | 0.5 |
| Total | 100 | 100 |

HGA-100 and HGA-110 each is a coating solution obtained by the mixing in a planetary mixer controlled to a temperature of 80°C. The coating solution was fed by a Mohno pump heated at 80°C and coated on a 38-micron heavy peeling PET liner (A-514, trade name, produced by Teijin DuPont) by passing a knife roll with a 0.05-mm gap. Thereafter, the coated surface was laminated with the peeling surface of a 50-micron light peeling PET liner (A-50, trade name, produced by Teijin DuPont) by passing a laminate roll with a 0.03-mm gap. In this way, a film sandwiched by two sheets of PET liner film was obtained. This film was continuously passed through an H-type UV lamp (120 W/cm) chamber manufactured by Fusion while setting the lamp height at 14 cm and thereby cured (crosslinked) with a total irradiation energy of 465 mJ/cm$^2$. The cured coating solution became an adhesive sheet favored with flexibility and tack, free of odor and having a thickness of about 25 to 30 microns. The shear creep value of the cured adhesive sheet after 3 minutes was measured in the same manner as in Example 1. The measured values are shown in Table 16. It is revealed that the adhesive having added thereto a hydrophilic plasticizer is soft and readily creeps.

Table 16

| Formulation | Shear Creep ($10^{-5}$ cm$^2$/dyne) |
|---|---|
| HGA-100 | 6.3 |
| HGA-110 | 21.6 |

From the prepared adhesive sheet, the light peeling liner A-50 (trade name) was peeled off. Subsequently, the adhesive layer was laminated with the non-treated surface of a high air-permeable substrate subjected to a back surface treatment and pressed by nip rolls at 85°C to attain satisfactory adhesion between the adhesive and the back surface substrate. The back surface-treated substrate used here was prepared by coating a silicone back surface-treating agent produced by Shin-Etsu Silicone as the back surface-treating agent on a rayon non-woven fabric (thickness: 50 microns, basis weight: 50 g/m$^2$) produced by 3M. The roll sheet obtained by laminating the adhesive sheet to the back surface substrate was slit into a width of 25 mm and after separating the heavy peeling liner A-541 (trade name), wound around a 3-inch core into a roll tape form. By virtue of the separation activity of the silicon back surface treating agent coated on the back surface substrate, the medical adhesive tape obtained could be peeled off without leaving the adhesive layer fixed to the back surface substrate.

The produced medical adhesive tape was fixed on an upper arm of a healthy person and after pressing it with a 1-kg roller, the adhesive tape was immediately peeled off at 180° and at a rate of 30 cm/min. The peel strength of adhesive sheet, the glue remaining on the skin and the peel feeling were evaluated. The results are shown in Table 17.

Table 17

| Formulation | Adhesive Strength to Skin | Glue Remaining | Peel Feeling |
|---|---|---|---|
| HGA-100 | 78 g/inch | none | no pain |
| HGA-110 | 95 g/inch | none | no pain |

The medical adhesive tapes having these compositions firmly adhered to skin, nevertheless, no pain was felt at the peeling and glue remaining on the skin was not generated. HGA-110 having added thereto a hydrophilic plasticizer is flexible and at the peeling, the adhesive is easily elongated, whereby the adhesive strength is increased and the skin irritation at the peeling is decreased. These medical adhesive tapes were measured on the moisture permeability in terms of a moisture vapor transition rate (MVTR, g/m$^2$*24 hr). The results are shown in Table 18.

Table 18

| Formulation | MVTR |
|---|---|
| HGA-100 | 3690 |
| HGA-110 | 3730 |
| g/m$^2$*24 hours | |

These medical adhesive tapes exhibited high moisture permeability and HGA-110 having added thereto a hydrophilic plasticizer exhibited higher moisture permeability. Furthermore, these medical adhesive tapes were measured on the moisture absorptivity in terms of a Ringer solution absorption percentage to the self-weight of adhesive and also evaluated on the swellability of adhesive. The results are shown in Table 19.

Table 19

| Formulation | Moisture Absorption Percentage (%) | Swelling |
|---|---|---|
| HGA-100 | 990 | swelled |
| HGA-110 | 970 | swelled |

These medical adhesive tapes exhibited very high moisture absorptivity.

From this, it is revealed that the medical adhesive of the present invention has both high moisture permeability and high moisture absorptivity, exhibits satisfactory initial adhesive strength to skin even with a thin adhesive layer, and can be peeled off while reducing the skin irritation at the peeling without causing glue remaining.

The medical adhesive tape of the present invention was evaluated on the safety. The adhesive tape was placed in a storage bag prepared by combining aluminum foils and after heat-sealing the bag, the tape was subjected to accelerated deterioration at 49°C for 18 weeks. This condition is an accelerated deterioration condition corresponding to 2 years according to the Von't Hoff theory. The tape after the accelerated deterioration was free of discoloration, oozing, softening and deterioration of fluidization and found to be stable without causing glue remaining at the peeling after adhesion to skin. Also, the tape was deteriorated for 4 months under high-humidity conditions of 45°C-90% RH. The glue at the edge part of the tape was slightly softened but deterioration of fluidization was not observed and the tape was stable.

Furthermore, in order to examine the light stability, the adhesive surface of the tape sample was continuously exposed for 4 months in a place under light of Life Line II White Fluorescent Lamp FLR40SW/M 40W manufactured by NEC at a brightness of 800 lux and determined on the deterioration degree. The tape was free of discoloration, oozing, softening and deterioration of fluidization and found to be stable without causing glue remaining at the peeling after adhesion to skin.

From these results, the hydrophilic medical tape having high moisture permeability and high moisture absorptivity of the present invention produced in Example 4 is revealed to have a sufficient adhesive strength to skin with a thin adhesive layer and hold high moisture permeability and high moisture absorptivity.

(Example 5)

Blended materials except for Example 4 and their properties and stability are described. Urethane Acrylate Oligomer PSA-903-2 produced by Kyoeisha Kagaku was used as the oligomer and the effect by the amount of hydrophilic plasticizer Polyethylene Glycol PEG-300 added and by the addition of antioxidant Irganox 245 was examined. In PSA-903-2, the proportion of 2-hydroxyethyl acrylate as a raw material for the production of PSA-901-1 was increased to about 1.2 times to enhance the degree of crosslinking and thereby not to cause softening even by the addition of a hydrophilic plasticizer in a large amount. The formulations are shown in Table 20.

Table 20

| | | HGA-10 | HGA-11 | HGA-13 | HGA-14 | HGA-16 | HGA-17 |
|---|---|---|---|---|---|---|---|
| PSA-903-2 | Oligomer | 79.95 | 79.45 | 69.95 | 69.45 | 59.95 | 59.45 |
| PEG 300 | hydrophilic plasticizer | 20 | 20 | 30 | 30 | 40 | 40 |
| Irgacure 2959 | UV initiator | 0.05 | 0.05 | 0.05 | 0.05 | 0.05 | 0.05 |
| Irganox 245 | antioxidant | | 0.5 | | 0.5 | | 0.5 |

Each formulation was mixed, coated and cured in the same manner as in Example 4 to produce a medical adhesive tape. The shear creep value of the cured adhesive sheet after 3 minutes was measured in the same manner as in Example 1 and the results are shown in Table 21.

Table 21

| | HGA-10 | HGA-11 | HGA-13 | HGA-14 | HGA-16 | HGA-17 |
|---|---|---|---|---|---|---|
| Shear Creep ($10^{-5}$cm$^2$/dyne) after 3 minutes | 9.7 | 4.9 | 12.8 | 8.6 | 13.8 | 9.7 |

As the amount of the hydrophilic plasticizer was larger, the cured adhesive was softer. When an antioxidant was added, the adhesive was slightly hardened. In the same manner as in Example 4, medical adhesive tapes using these adhesives each was fixed on an upper arm of a normal person and after pressing it with a 1-kg roller, the adhesive tape was immediately peeled off at 180° and at a rate of 30 cm/min. The peel strength of adhesive tape, the glue remaining on the skin and the peel feeling were evaluated. The results are shown in Table 22.

Table 22

| | HGA-10 | HGA-11 | HGA-13 | HGA-14 | HGA-16 | HGA-17 |
|---|---|---|---|---|---|---|
| Adhesive strength to skin | 35 g/inch | 85 g/inch | 125 g/inch | 125 g/inch | 115 g/inch | 105 g/inch |
| Glue remaining | none | none | entire remaining of oil | entire remaining of oil | entire remaining of oil | entire remaining of oil |
| Peel feeling | no pain | no pain | no pain | no pain | no pain | no pain |

When hydrophilic plasticizer PEG-300 is added in an amount of 30 wt% or more, the adhesive becomes soft to have good flexibility and therefore, increased in the adhesive strength to skin, however, an oily substance remains on the skin after the peeling. The amount of hydrophilic plasticizer PEG-300 added is preferably 20 wt% or less. Also, HGA-10 and HGA-11 where PEG-300 was added in an amount of 20 wt% were free of glue remaining but HGA-10 where antioxidant Irganox 245 was not added was low in the adhesive strength.

HGA-10 and HGA-11 were evaluated on the safety. The adhesive tape was placed in a storage bag prepared by combining aluminum foils and after heat-sealing the bag, the tape was subjected to accelerated deterioration at 49°C for 18 weeks. This condition.is an accelerated deterioration condition corresponding to 2 years according to the Von't Hoff theory. The tape after the accelerated deterioration was free of discoloration, oozing, softening and deterioration of fluidization and found to be stable without causing glue remaining at the peeling after adhesion to skin.

Furthermore, in order to examine the light stability, the glue surface of the tape sample was continuously exposed for 4 months in a place under light of Life Line II White Fluorescent Lamp FLR40SW/M 40W manufactured by NEC at a brightness of 800 lux and determined on the deterioration degree. The adhesive tape of HGA-11 having added thereto antioxidant Irganox 245 was free of discoloration, oozing, softening and deterioration of fluidization and found to be stable without causing glue remaining at the peeling after adhesion to skin. However, in HGA-10 where the antioxidant was not added, the adhesive was softened and became sticky. This reveals that for ensuring the light stability, the addition of antioxidant Irganox 245 in an amount of about 0.5 wt% is effective.

**Claims**

1.  A pressure-sensitive adhesive composition for medical pressure-sensitive adhesive tapes, comprising a base polymer containing a pressure-sensitive adhesive polymer obtained by crosslinking or curing a precursor containing a urethane acrylate oligomer having a carboxyl group and an ultraviolet (UV) initiator in an amount of less than 1..5% by weight based on the total amount of the adhesive composition, said base polymer having a glass transition temperature (Tg) of 0°C or less, wherein the pressure-sensitive adhesive adhesive composition further comprises a hindered phenol-base antioxidant agent in an amount of 0.03 to 1% by weight based on the total amount of the adhesive composition.

2.  The pressure-sensitive adhesive composition as claimed in claim 1, which further comprises a plasticizer.

3.  The pressure-sensitive adhesive composition as claimed in claim 1 or 2, wherein said urethane acrylate oligomer is an oligomer obtained by reacting a mixture containing a polyalkylene glycol, an organic isocyanate having two or more isocyanate groups, and a compound having both a functional group reactive with the isocyanate group and a (meth)acryloyl group, and a compound having both a functional group reactive with the isocyanate group and a carboxylic group.

4.  The pressure-sensitive adhesive composition as claimed in claim 3, wherein the content of the unit derived from the compound having both a functional group reactive with the isocyanate group and a (meth)acryloyl group in said urethane acrylate oligomer is from 0.35 to 0.6 mol%.

5.  The pressure-sensitive adhesive composition as claimed in claim 4, wherein the content of said unit is from 0.40 to 0.45 mol%.

6.  The pressure-sensitive adhesive composition as claimed in any one of claims 1-5, wherein said plasticizer is a hydrophilic plasticizer having, as the hydrophilic group, a hydroxyl group capable of hydrogen-bonding to a carboxyl group.

7.  The pressure-sensitive adhesive composition as claimed in any one of claims 1 to 6, wherein said precursor contains said ultraviolet (UV) initiator in an amount of 0.01 to 1.0 mass% based on the mass of said urethane acrylate oligomer,

8.  A medical pressure-sensitive adhesive tape comprising a highly moisture-permeable substrate having thereon the pressure-sensitive adhesive composition claimed in any one of claims 1 to 7.

9.  A medical pressure-sensitive adhesive tape consisting of a layer of the pressure-sensitive adhesive composition claimed in any one of claims 1 to 7.

10. A method for producing a pressure-sensitive adhesive composition for medical pressure-sensitive adhesive tapes, comprising:

    mixing a pressure-sensitive adhesive composition precursor containing a urethane acrylate oligomer having a carboxyl group and an ultraviolet (UV) initiator in an amount of less than 1.5% by weight based on the total amount of the adhesive composition, and a hindered phenol-base antioxidant agent in amount of 0.03 to 1 % by weight based on the total amount of the adhesive composition,
    heating said adhesive composition precursor at a temperature of 50°C to less than 100°C to form a coating solution having a viscosity of 2,000 to 100,000 mPa-s, and
    applying said coating solution to a substrate and thereafter, crosslinking or curing said urethane acrylate oligomer to form a base polymer having a glass transition temperature (Tg) of 0°C or less.

**Patentansprüche**

1.  Haftklebemasse für medizinische Haftklebebänder umfassend ein Basispolymer enthaltend ein Haftklebepolymer, das durch Vernetzen oder Aushärten eines Vorprodukts erhalten wird, das ein Urethanacrylatoligomer mit einer Carboxylgruppe und einen Ultraviolett(UV)-Initiator in einer Menge von weniger als 1,5 Gew.-%, auf die Gesamtmenge der Klebemasse bezogen, enthält, wobei das Basispolymer eine Glasübergangstemperatur (Tg) von 0 °C oder weniger aufweist, wobei die Haftklebemasse ferner ein Antioxidationsmittel auf Basis eines gehinderten Phenols in einer Menge von 0,03 bis 1 Gew.-%, auf die Gesamtmenge der Klebemasse bezogen, aufweist.

**2.** Haftklebemasse nach Anspruch 1, die ferner einen Weichmacher umfasst.

**3.** Haftklebemasse nach Anspruch 1 oder 2, wobei das Urethanacrylatoligomer ein Oligomer ist, das durch Umsetzen einer Mischung erhalten wird, die ein Polyalkylenglykol, ein organisches Isocyanat mit zwei oder mehreren Isocyanatgruppen und eine Verbindung mit sowohl einer funktionellen, gegenüber der Isocyanatgruppe reaktiven Gruppe als auch einer (Meth)acryloylgruppe und eine Verbindung mit sowohl einer funktionellen, gegenüber der Isocyanatgruppe reaktiven Gruppe als auch einer Carboxylgruppe enthält.

**4.** Haftklebemasse nach Anspruch 3, wobei der Gehalt der Einheit, die von der Verbindung mit sowohl einer funktionellen, gegenüber der Isocyanatgruppe reaktiven Einheit als auch einer (Meth)acryloylgruppe abgeleitet ist, in dem Urethanacrylatoligomer 0,35 bis 0,6 Mol-% beträgt.

**5.** Haftklebemasse nach Anspruch 4, wobei der Gehalt der Einheit 0,40 bis 0,45 Mol-% beträgt.

**6.** Haftklebemasse nach einem der Ansprüche 1-5, wobei der Weichmacher ein hydrophiler Weichmacher mit einer Hydroxylgruppe, die zur Wasserstoffbrückenbindung an eine Carboxylgruppe befähigt ist, als hydrophile Gruppe ist.

**7.** Haftklebemasse nach einem der Ansprüche 1 bis 6, wobei das Vorprodukt den Ultraviolett(UV)-Initiator in einer Menge von 0,01 bis 1,0 Massen-%, auf die Masse des Urethanacrylatoligomers bezogen, enthält.

**8.** Medizinisches Haftklebeband umfassend ein hochgradig feuchtigkeitsdurchlässiges Substrat, auf dem sich die Haftklebemasse nach einem der Ansprüche 1 bis 7 befindet.

**9.** Medizinisches Haftklebeband bestehend aus einer Schicht der Haftklebemasse nach einem der Ansprüche 1 bis 7.

**10.** Verfahren zur Herstellung einer Haftklebemasse für medizinische Haftklebebänder umfassend:

das Mischen eines Haftklebemassenvorprodukts enthaltend ein Urethanacrylatoligomer mit einer Carboxylgruppe und einen Ultraviolett(UV)-Initiator in einer Menge von weniger als 1,5 Gew.-%, auf die Gesamtmenge der Klebemasse bezogen, und ein Antioxidationsmittel auf Basis eines gehinderten Phenols in einer Menge von 0,03 bis 1 Gew.-%, auf die Gesamtmenge der Klebemasse bezogen,
das Erhitzen des Klebemassenvorprodukts bei einer Temperatur von 50 °C bis weniger als 100 °C unter Bildung einer Beschichtungslösung mit einer Viskosität von 2.000 bis 100.000 mPa·s und
das Aufbringen der Beschichtungslösung auf ein Substrat und daraufhin das Vernetzen oder Aushärten des Urethanacrylatoligomers unter Bildung eines Basispolymers mit einer Glasübergangstemperatur (Tg) von 0 °C oder weniger.

## Revendications

**1.** Composition adhésive sensible à la pression pour des rubans adhésifs médicaux sensibles à la pression, comprenant un polymère de base contenant un polymère adhésif sensible à la pression obtenu par réticulation ou durcissement d'un précurseur contenant un oligomère acrylate d'uréthane comportant un groupe carboxyle et un initiateur sensible aux ultraviolets (UV) dans une quantité inférieure à 1,5 % en poids, ce pourcentage étant exprimé relativement à la quantité totale de la composition adhésive, ledit polymère de base ayant une température de transition vitreuse $(T_g)$ de 0 °C ou moins, la composition adhésive sensible à la pression comprenant en outre un agent antioxydant de base de type phénol encombré dans une quantité représentant 0,03 à 1 % en poids, ce pourcentage étant exprimé relativement à la quantité totale de la composition adhésive.

**2.** Composition adhésive sensible à la pression selon la revendication 1, laquelle comprend en outre un plastifiant.

**3.** Composition adhésive sensible à la pression selon la revendication 1 ou 2, dans laquelle ledit oligomère acrylate d'uréthane est un oligomère obtenu en faisant réagir un mélange contenant un polyalkylène glycol, un isocyanate organique comportant deux groupes isocyanate ou plus, et un composé comportant à la fois un groupe fonctionnel réactif avec le groupe isocyanate et un groupe (méth)acryloyle, et un composé comportant à la fois un groupe fonctionnel réactif avec le groupe isocyanate et un groupe carboxylique.

4. Composition adhésive sensible à la pression selon la revendication 3, dans laquelle la proportion de l'unité dérivée du composé comportant à la fois un groupe fonctionnel réactif avec le groupe isocyanate et un groupe (méth) acryloyle dans ledit oligomère acrylate d'uréthane est un pourcentage molaire de 0,35 à 0,6 %.

5. Composition adhésive sensible à la pression selon la revendication 4, dans laquelle la proportion de ladite unité est un pourcentage molaire de 0,40 à 0,45 %.

6. Composition adhésive sensible à la pression selon l'une quelconque des revendications 1 à 5, dans laquelle ledit plastifiant est un plastifiant hydrophile comportant, comme groupe hydrophile, un groupe hydroxyle capable de former des liaisons hydrogène avec un groupe carboxyle.

7. Composition adhésive sensible à la pression selon l'une quelconque des revendications 1 à 6, dans laquelle ledit précurseur contient ledit initiateur sensible aux ultraviolets (UV) dans une quantité représentant un pourcentage massique de 0,01 à 1,0 %, ce pourcentage étant exprimé relativement à la masse dudit oligomère acrylate d'uréthane.

8. Ruban adhésif médical sensible à la pression comprenant un substrat hautement perméable à l'humidité sur lequel est présente la composition adhésive sensible à la pression selon l'une quelconque des revendications 1 à 7.

9. Ruban adhésif médical sensible à la pression consistant en une couche de la composition adhésive sensible à la pression selon l'une quelconque des revendications 1 à 7.

10. Méthode de préparation d'une composition adhésive sensible à la pression pour des rubans adhésifs médicaux sensibles à la pression, comprenant :

le mélange d'un précurseur de composition adhésive sensible à la pression contenant un oligomère acrylate d'uréthane comportant un groupe carboxyle et un initiateur sensible aux ultraviolets (UV) dans une quantité inférieure à 1,5 % en poids, ce pourcentage étant exprimé relativement à la quantité totale de la composition adhésive, et un agent antioxydant de base de type phénol encombré dans une quantité représentant 0,03 à 1 % en poids, ce pourcentage étant exprimé relativement à la quantité totale de la composition adhésive,
le chauffage dudit précurseur de composition adhésive à une température de 50 °C à moins de 100 °C pour former une solution de revêtement ayant une viscosité de 2 000 à 100 000 mPa·s, et
l'application de ladite solution de revêtement sur un substrat, et ensuite la réticulation ou le durcissement dudit oligomère acrylate d'uréthane pour former un polymère de base ayant une température de transition vitreuse ($T_g$) de 0 °C ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000116695 A
- US 5536768 A
- JP 2002060456 A